# FASCICULE DE BREVET EUROPEEN

(11) **EP 0 619 488 B1**
(45) Date de publication et mention de la délivrance du brevet: **24.09.1997**
(21) Numéro de dépôt: 94400737.6
(22) Date de dépôt: 05.04.1994
(51) Int. Cl.: G01N 29/00, G01N 29/16, G01N 29/20

(54) **Procédé et dispositif à ultrasons de détection et d'identification de contaminant tel que le givre à la surface d'une structure**
Ultraschallverfahren und -vorrichtung zum Nachweis und zur Identifizierung von Verunreinigungsstoffen zum Beispiel der Eisbildung auf der Oberfläche einer Struktur
Ultrasonic method and apparatus for the detection and the identification of a contaminant for example frost, on the surface of a structure

(30) Priorité: 07.04.1993 FR 9304126
(43) Date de publication de la demande: 12.10.1994
(73) Titulaire: INTERTECHNIQUE, F-78370 Plaisir (FR)
(72) Inventeur: Larue, François, F-78640 Neauphle le Chateau (FR); Bisson, Jérôme, F-92350 Le Plessis Robinson (FR)
(74) Mandataire: Fort, Jacques

(56) Documents cités:
- US-A- 2 966 058
- US-A- 4 461 178
- US-A- 4 628 736
- US-A- 5 095 754

## Description

La présente invention concerne la détection de la présence et l'identification d'un contaminant, appartenant à une famille de contaminants connus, sur la surface d'une structure et utilise la différence d'impédance acoustique entre l'air et les contaminants tels que le givre.

Elle trouve une application particulièrement importante en aéronautique où, pendant les périodes froides, il est important de savoir, avant décollage d'un avion, si les surfaces des structures portantes sont propres et de déterminer, en cas de pollution, quelle est la nature du contaminant (givre, mélange de phases solides et liquides, liquide, etc).

On connaît déjà des dispositifs à ultrasons de détection de givre et éventuellement de mesure de l'épaisseur de la couche de givre. Ils ne permettent pas d'identifier un contaminant d'autre nature éventuellement présent. Or il est important de discriminer, notamment avant décollage d'un avion, la présence sur les ailes de givre qui réduit fortement et durablement la portance, de neige fondante, d'un liquide de dégivrage ou d'anti-givrage ou d'un mélange d'eau et de liquide de dégivrage ou d'anti-givrage susceptible de s'évacuer dès accélération.

On connaît également (US-A-2 966 058) un procédé de mesure des propriétés dynamiques d'un matériau suivant lequel on compare l'amplitude et la phase d'ondes acoustiques de cisaillement qui ont traversé un bloc à l'amplitude et la phase d'ondes réfléchies par une surface du bloc qui porte un échantillon du matériau.

L'invention vise à permettre non seulement une détection de la présence de contaminant, mais aussi une discrimination entre les contaminants possibles. Elle utilise pour cela l'effet, sur la réflexion des ondes ultrasonores, des ruptures d'impédance acoustique à l'interface avec l'air dans le cas d'une surface propre, avec le contaminant dans le cas contraire.

On sait que l'impédance acoustique W d'un matériau est égale au produit de sa masse volumique par la vitesse du son dans le matériau. Elle a pour valeur :
- 1,4 x 10⁶ kg/m².s pour l'eau,
- 1,7 x 10⁶ kg/m².s environ pour la plupart des liquides de dégivrage et d'anti-givrage,
- 4 x 10⁶ kg/m².s environ pour la glace et le givre.

Les coefficients de réflexion R et de transmission D à l'interface entre deux milieux dépendent des impédances W des milieux séparés par l'interface. A incidence nulle :
R = (W₂-W₁)/(W₂+W₁)
D = 2W₂/(W₂+W₁),
les indices 1 et 2 correspondant aux milieux amont et aval dans le sens de la propagation des ondes.

Les coefficients R et D varient également en fonction de l'angle d'incidence sur l'interface, entre l'incidence normale et l'incidence correspondant à la réflexion totale.

L'invention propose notamment dans ce but un procédé de détection et de discrimination suivant la revendication 1.

L'angle d'incidence est avantageusement choisi de façon à conserver une puissance d'écho élevée même en présence de glace sur la surface. L'écho commence par diminuer à partir de l'incidence normale puis augmente jusqu'à atteindre 100% pour les ondes longitudinales au-delà de la réflexion totale. Dans la pratique, on choisira un angle d'incidence compris entre celui pour lequel on retrouve, dans le cas de la glace, un coefficient de réflexion égal à celui obtenu sous incidence normale et un angle peu supérieur à l'angle de réflexion totale des ondes longitudinales. Dans le cas d'un matériau ayant une impédance acoustique d'environ 2,85, un angle compris entre 35° et 45° donnera généralement des résultats satisfaisants.

Pour détecter et discriminer le givre, on constitue avantageusement le matériau constitutif du bloc pour présenter une impédance à peu près égale à la moyenne des impédances des liquides de dégivrage et d'anti-givrage et de la glace. On peut notamment utiliser alors le polysulfone ou PSU pour lequel W=2,85 x 10⁶kg/m².s et un angle d'incidence β proche de l'angle de réflexion totale pour le dioptre PSU/glace.

Sous incidence normale, on aurait, en utilisant le PSU :
R = -0,25 avec un contaminant constitué par un liquide dégivrant ;
R = -0,34 avec de l'eau ;
R = +0,17 avec de la glace (la valeur positive correspondant à une inversion de phase) ;
R = 0,99 avec de l'air, c'est-à-dire dans le cas d'une surface propre.

Une solution commode consiste à mémoriser l'écho obtenu avec une surface de structure "propre" et notamment de mesurer l'intervalle de temps qui s'écoule entre l'émission de la salve et le début de l'écho, ainsi que l'amplitude et le signe du premier pic d'écho dans le cas d'une surface propre, puis à comparer (éventuellement après correction tenant compte de la température) les grandeurs correspondantes obtenues lors d'essais successifs de détection.

Dans un mode avantageux de mise en oeuvre de l'invention, le procédé permet également de déterminer l'épaisseur de la couche de contaminant, par mesure de l'intervalle de temps qui sépare l'écho sur ledit interface de l'écho sur la surface de contact du contaminant avec l'air.

L'invention propose également un dispositif de détection et d'identification de la nature d'un contaminant, pouvant être du givre, recouvrant la surface d'une structure, suivant la revendication 4.

La présence d'un écho d'interface affaibli, sans inversion de phase, présentant un retard correspondant au temps d'aller-retour jusqu'à l'interface, indique alors la présence d'une pellicule de liquide sur la surface. Un écho avec inversion de phase indique du givre. Une atténuation très forte de l'écho indique la présence d'un contaminant ayant une impédance acoustique proche de celle du bloc de retard, c'est-à-dire de neige fondante, d'un mélange d'eau et de cristaux de glace, etc.

Le dispositif peut également être prévu pour mesurer l'épaisseur de givre. Pour cela les moyens d'excitation et d'analyse sont prévus pour mesurer également l'intervalle de temps entre l'écho sur l'interface et l'écho sur la face externe de la couche de givre.

Le dispositif peut comporter des moyens d'auto-test vérifiant la présence d'un écho à chaque excitation du transducteur ou de chaque transducteur d'émission.

L'invention concerne encore d'autres dispositions avantageusement utilisables en liaison avec les précédentes, mais pouvant l'être indépendamment. Toutes ces dispositions apparaîtront mieux à la lecture de la description qui suit d'un mode particulier de réalisation, donné à titre d'exemple non-limitatif. La description se réfère aux dessins qui l'accompagnent, dans lequels :
- la figure 1 est un schéma synoptique de principe d'un dispositif selon un mode particulier de réalisation de l'invention ;
- la figure 2 est un chronogramme montrant, en tirets, l'allure d'un signal d'écho obtenu avec une surface propre et, en traits pleins, un signal d'écho obtenu sur une surface portant une pellicule de liquide d'anti-givrage ;
- les figures 3, 4 et 5, similaires à la figure 2, correspondent respectivement à la présence d'un mélange d'eau et de liquide dégivreur, à la présence de neige fondante ou "slush", et à la présence de givre;
- la figure 6 montre un mode possible d'affichage.

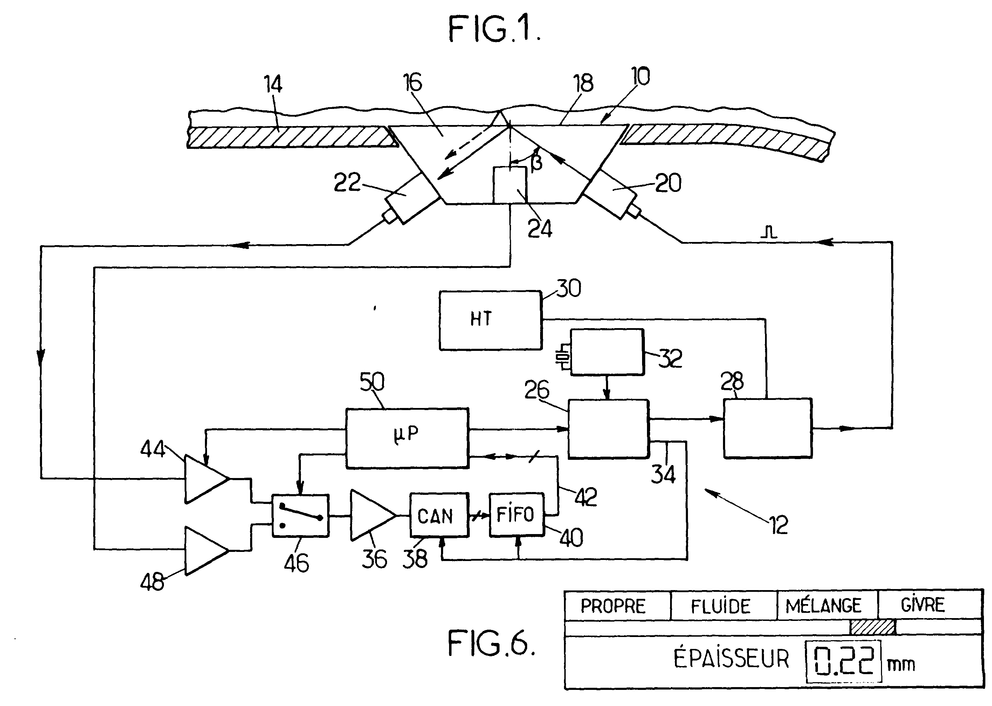

Le dispositif dont la constitution de principe est montrée en figure 1 peut être regardé comme comprenant une sonde 10 et une unité d'excitation et d'analyse 12. Dans la réalité, l'unité d'excitation et d'analyse sera souvent associée à plusieurs sondes 10 et effectuera des opérations de détection successives sur les différentes sondes, de façon cyclique.

La sonde 10 est prévue pour être monté dans une structure de façon que son interface avec le milieu ambiant soit de niveau avec la surface externe de la structure 14. Elle comporte un bloc 16 destiné à constituer une ligne à retard, en un matériau dont l'impédance acoustique est intermédiaire entre celle du givre et celle des liquides, donc proche de celle d'un mélange de phases liquide et solide. On peut notamment utiliser le polysulfone ou PSU dont l'impédance acoustique est d'environ 2,85 x 10⁶ kg/m².s. Le bloc 16 présente généralement une interface 18 plane, par exemple de forme circulaire avec un diamètre de un à quelques centimètres. Toutefois l'interface peut avoir une forme bombée, notamment pour s'adapter à la structure équipée du dispositif. Il a deux faces obliques symétriques par rapport à un plan médian du bloc 18, destinées respectivement à recevoir un transducteur d'émission 20 et un transducteur de réception 22. Les faces et les transducteurs sont orientées de façon que l'angle d'incidence β soit proche de l'angle critique dans le cas d'une interface avec la glace. Pratiquement l'angle d'incidence β sera généralement compris entre 40 et 55°.

Les transducteurs 20 et 22 seront généralement constitués par des transducteurs piézo-électriques fortement amortis, destinés à fournir, lorsqu'ils sont excités par une impulsion unique, une salve ultrasonore constituée par un train d'ondes alternatives amorties. On peut notamment utiliser des transducteurs ayant une fréquence de résonance d'environ 2 MHz. La section droite des transducteurs est choisie notamment en fonction de l'épaisseur maximale de givre que l'on veut être capable de mesurer. Dans la pratique, avec un angle β d'environ 45° et des transducteurs ayant un diamètre d'élément actif de 6 à 7 mm (et une surface émissive d'environ 10 mm de diamètre) on peut mesurer une épaisseur de givre allant jusqu'à 3 mm environ.

On verra que la discrimination et la mesure d'épaisseur sont améliorées en effectuant une correction de température qui exige de connaître la température du bloc 16. Dans ce dernier peut en conséquence être encastrée une sonde de température 24, dont le rôle apparaîtra plus loin.

L'unité d'excitation et d'analyse 12 est prévue pour appliquer une impulsion électrique d'amplitude et de durée déterminées au transducteur d'émission 20 et pour analyser l'écho ultrasonore reçu par le transducteur 22.

L'unité d'excitation comporte une voie d'émission reliée au transducteur 20. Dans le mode de réalisation illustré, cette voie comporte un générateur 26 d'impulsions brèves (200 nanosecondes par exemple) commandant la fermeture d'un commutateur électronique 28 relié à une source haute tension 30. Le générateur peut être muni d'une horloge 32 fixant la durée des impulsions et comporter un diviseur de fréquence permettant de distribuer, à partir d'une sortie 34, un signal d'horloge, par exemple à une fréquence de 20 MHz, destiné à l'échantillonnage de l'écho.

Le transducteur 20 peut être d'un type couramment disponible dans le commerce, de faible encombrement (par exemple environ 7mm de diamètre et 13mm de longueur). Il est amorti fortement, de façon que les pics d'amplitude ultrasonore fournis décroissent rapidement dans le temps. Pour la détection du givre, une fréquence de résonance des transducteurs d'environ 1 à 3 MHz, fournissant des ondes longitudinales, donne généralement des résultats satisfaisants.

L'unité comporte également une voie de réception ayant un amplificateur 36, un convertisseur analogique-numérique (CAN) 38 ayant une cadence d'échantillonnage nettement plus élevée que la fréquence de résonance des transducteurs (par exemple dix fois cette fréquence) et une mémoire 40 organisée en file d'attente et reliée à un bus de données 42. Le fonctionnement du CAN 38 et de la mémoire 40 est cadencé par le signal d'horloge provenant de la sortie 34.

Le mode de réalisation représenté sur la figure 1 est prévu pour permettre une correction d'échelle et une correction en fonction de la température. Il comporte dans ce but un pré-amplificateur 44 à gain commandé, interposé entre le transducteur 22 et l'amplificateur 36 à gain fixe. Un commutateur 46 permet d'orienter à volonté, vers la voie de réception, soit le signal de sortie de l'amplificateur 44, soit le signal de sortie d'un amplificateur à gain fixe 48 relié au capteur de température 24.

Le fonctionnement de l'unité 12 est commandé par une unité de calcul 50, comportant un microprocesseur et des mémoires, qui effectue également l'analyse des signaux. Cette unité de calcul permet de lancer chaque mesure en envoyant un signal de départ au générateur 26. Elle permet également d'orienter le commutateur 46 de façon à mesurer la température de fonctionnement. En fonction de la différence entre la température de calibrage et la température d'essai, il tient compte de la variation de vitesse du son en utilisant une table de correction stockée en mémoire.

La mise en oeuvre du dispositif qui a été décrit pour détecter la formation éventuelle de givre est précédée d'une étape de calibration, qui peut être effectuée une fois pour toutes ou répétée à intervalles réguliers dans des conditions où la surface est propre.

Au cours du calibrage, on émet une impulsion et on analyse le signal d'écho, sur une durée couvrant au moins les deux premières alternances du signal reçu (dans le cas d'une simple détection) ou jusqu'à la première alternance du signal d'écho sur la surface libre de la couche de contaminant d'épaisseur maximale à mesurer (en cas de dispositif permettant également la mesure). On relève les instants R₁ de début de signal d'écho, R₂ du premier passage à zéro et R₃ du second passage à zéro. La température de mesure est également mémorisée.

Un nouveau calibrage peut être effectué immédiatement avant chaque série de mesures, alors que la structure est à l'abri, donc en principe non polluée. L'obtention des mêmes valeurs R₁, R₂ et R₃ confirme que la sonde est propre. Dans le cas contraire, on adopte les valeurs R₁, R₂ et R₃ mémorisées. Dans la mesure où la sonde est propre, l'unité de calcul, programmée à cet effet, règle le gain du préamplificateur 44 de façon que l'amplitude du pic le plus élevé du signal reçu par le CAN 38 corresponde à la pleine échelle. L'amplitude A₀ du premier pic au moins est également mémorisée.

Le calibrage peut comporter une séquence de plusieurs opérations identiques, les valeurs mémorisées constituant alors des moyennes, par exemple sur dix essais successifs.

Lors de chaque détection proprement dite, l'unité de calcul 50 commence par mesurer la température, par orientation du commutateur 46, qui permet de compenser la variation de la vitesse des ondes ultrasonores dans le PSU en fonction de la température, suivant une table mémorisée. Puis le transducteur d'émission 20 est excité par une impulsion. Des tranches temporelles importantes sont celles allant de t₀ à t₁ en ce qui concerne la détection, au-delà de t₂ en ce qui concerne la mesure d'épaisseur (t₂ désignant le temps de vol de l'émission à la réception pour l'épaisseur minimale qu'il est jugé nécessaire de mesurer).

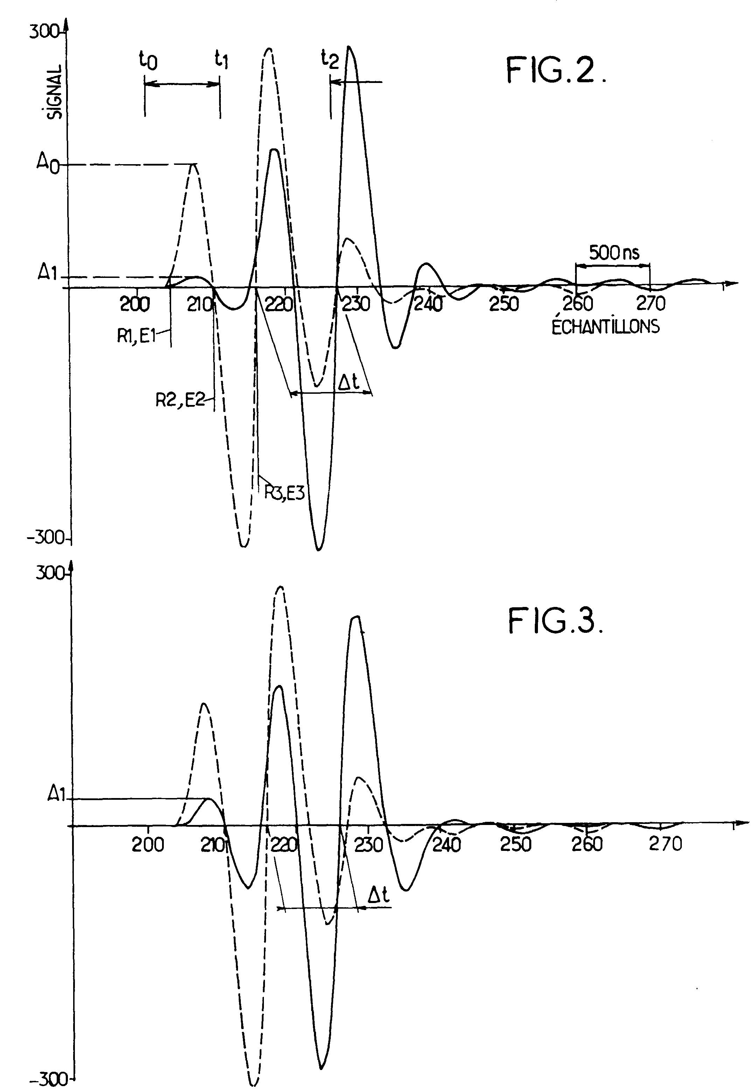

La courbe en traits pleins de la figure 2 montre, à titre d'exemple, un signal obtenu dans le cas d'une pellicule de liquide d'anti-givrage de 0,44mm d'épaisseur à la surface de la sonde. Dans ce cas les passages à zéro interviennent aux instants E₁, E₂ et E₃. L'unité de calcul est également prévue pour mesurer l'amplitude des premiers pics et leurs signes et les comparer à l'amplitude mémorisée des pics obtenus avec la sonde "propre". Dans la mesure où la température n'a pas changée depuis le calibrage, les points R₁ et E₁ coïncident. En cas de modification de température, une correction effectuée par l'unité de calcul permet de les faire coïncider.

En cas de présence d'un liquide d'anti-givrage (éthylène-glycol par exemple), le premier pic a la même phase que dans le cas de la sonde propre (figure 2), ce qui indique que le contaminant est un liquide, mais l'amplitude A₁ est très inférieure à l'amplitude A₀, du fait que la rupture d'impédance est moins marquée que dans le cas d'une sonde propre. L'emplacement des pics peut être repéré par détection du passage à zéro de la dérivée de la courbe. L'unité de calcul peut être prévue pour indiquer la présence de liquide lorsque le rapport A₁/A₀ est dans une plage déterminée, sans changement de signe.

Le dispositif peut également être prévu pour mesurer l'épaisseur de la pellicule de liquide. Pour cela, le retard entre l'apparition du premier pic d'écho à la surface de la pellicule et le premier pic d'écho à l'interface, est relevé. Ce retard Δt correspond au temps d'aller-retour dans la pellicule, sous une incidence qui est connue. Il est possible d'en déduire l'épaisseur de la pellicule, d'environ 0,4mm dans le cas illustré sur la figure 2.

Le cas illustré sur la figure 3 est celui d'une pellicule d'un mélange d'eau et de fluide anti-givrage. Dans ce cas l'atténuation est plus faible que pour du fluide d'anti-givrage seul, le coefficient de réflexion sous incidence normale étant de -0,34 pour l'eau alors qu'il est de -0,25 avec le fluide.

Le retard Δt correspond dans ce cas à la présence d'une pellicule de mélange eau-fluide d'environ 0,37mm d'épaisseur.

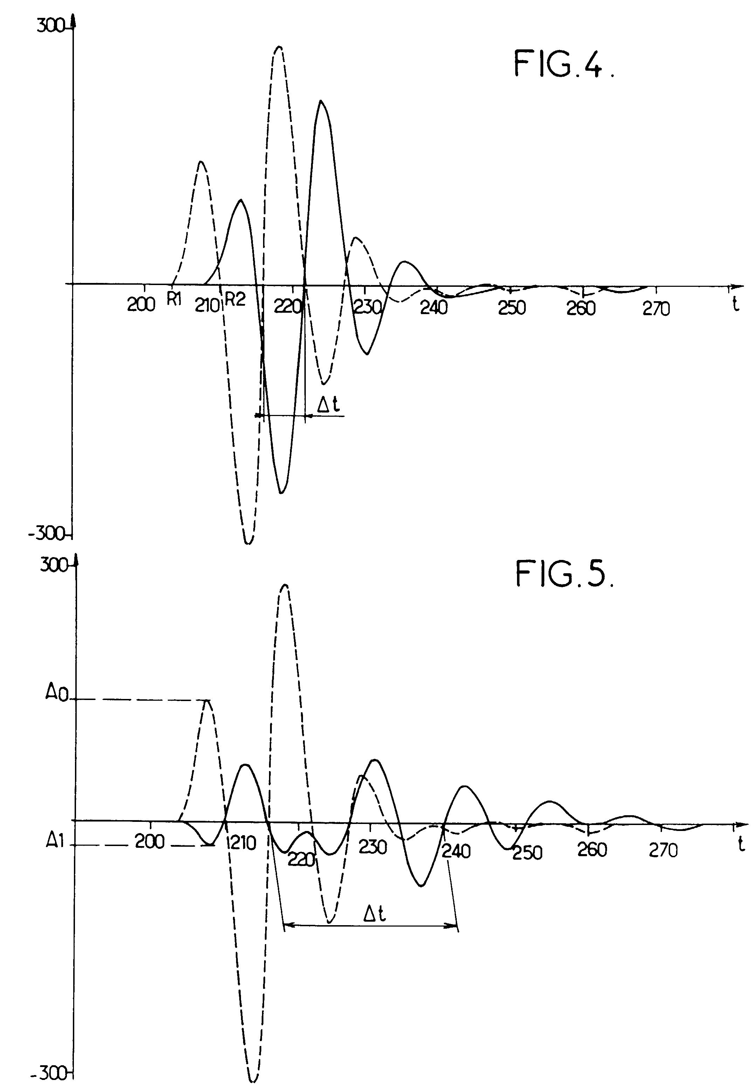

Le cas illustré en figure 4 correspond à la présence de neige fondante, dont l'impédance acoustique est très proche de celle du PSU. Il y a en conséquence perte de l'écho d'interface. Il n'en reste pas moins possible de mesurer l'épaisseur de la pellicule contaminante à partir de l'intervalle de temps Δt. Dans le cas illustré sur la figure 4, elle est d'environ 0,5 mm.

Enfin, le cas illustré sur la figure 5 correspond à la présence de glace sur la sonde 10. Dans ce cas la réflexion à l'interface s'accompagne d'un changement de phase et le premier pic, d'amplitude A₁, a une polarité opposée à celle du pic A₀ du signal d'écho sur le capteur propre.

Là encore, il est possible de mesurer l'épaisseur de givre, d'environ 2,4mm dans le cas illustré sur la figure 5, à partir de l'intervalle de temps Δt. Dans ce cas, les réflexions à l'interface et à la surface de la pellicule de glace se traduise par des pics de polarités opposées.

Dans tous les cas exposés ci-dessus, il est avantageux d'effectuer une séquence de mesures successives et d'afficher la moyenne des résultats, ce qui permet de mieux tenir compte des irrégularités temporaires de la surface. La mesure reste possible aussi longtemps que l'épaisseur n'est pas telle que l'énergie réfractée à l'interface n'atteint plus le transducteur récepteur 22. Avec des transducteurs d'environ 6 mm ou un quart de pouce de diamètre actif, on arrive en général à mesurer jusqu'à 3mm environ d'épaisseur.

L'affichage peut s'effectuer, comme indiqué sur la figure 6, par déplacement d'une plage colorée sur une échelle et indication numérique d'une épaisseur.

## Revendications

1. Procédé de détection de présence et d'identification d'un contaminant sur la surface d'une structure, suivant lequel on dirige une salve d'ultrasons vers l'interface à travers un bloc de matériau (16), constituant une ligne à retard, caractérisé en ce qu'on donne au matériau une impédance acoustique intermédiaire entre celle des liquides de dégivrage et d'anti-givrage et celle de la glace, on compare l'amplitude de l'écho obtenu sur l'interface, sous incidence oblique, à celles de la salve incidente ou à celles d'un écho de référence obtenu avec une surface propre, et on détermine si l'écho a subi une inversion de phase.

2. Procédé selon la revendication 1, caractérisé en ce que, au cours d'une phase préliminaire de calibrage, on mémorise l'écho obtenu avec une surface propre et on mesure l'amplitude et le signe du premier pic d'écho.

3. Procédé selon la revendication 1 ou 2, caractérisé en ce qu'on mesure l'intervalle de temps qui sépare l'écho sur ledit interface de l'écho sur la surface de contact du contaminant avec l'air pour en déduire l'épaisseur de la couche de contaminant.

4. Dispositif de détection de la présence et d'identification d'un contaminant sur la surface d'une structure, comprenant une sonde (10) ayant un bloc de retard (16) présentant une interface destinée à affleurer la surface, munie de moyens transducteurs et comprenant des moyens d'excitation et d'analyse (12), caractérisé en ce que la sonde comporte des transducteurs d'émission et de réception (20-22) orientés perpendiculairement chacun à une de deux faces du bloc à retard ayant la même inclinaison par rapport à l'interface, le bloc étant en un matériau ayant une impédance acoustique comprise entre 2, 7 et 3 x 10⁶kg/m².s, et en ce que les moyens d'excitation et d'analyse sont prévus pour envoyer une impulsion électrique d'excitation aux transducteurs d'émission et comparer l'amplitude et la phase de l'écho d'interface avec un écho de référence correspondant à l'absence de contaminant ou avec le signal ultrasonore provenant du transducteur d'émission.

5. Dispositif selon la revendication 4, caractérisé en ce que le bloc de retard (16) est en polysulfone.

6. Dispositif selon la revendication 4 ou 5, caractérisé en ce que les faces du bloc sont orientées de façon que l'angle d'incidence sur l'interface soit proche de l'angle de réflexion totale pour les ondes longitudinales pour le dioptre matériau/glace.

7. Dispositif selon la revendication 4, 5 ou 6, caractérisé en ce que les moyens d'excitation et d'analyse comportent des moyens (40) de mémorisation d'un écho de référence obtenu avec une surface propre.

8. Dispositif selon l'une quelconque des revendications 4 à 7, caractérisé en ce que le transducteur ou chaque transducteur d'émission (20) est de type amorti et en ce que les moyens d'excitation sont prévus pour fournir des impulsions brèves au transducteur d'émission.

9. Dispositif selon l'une quelconque des revendications 4 à 8, caractérisé en ce que les moyens d'analyse sont prévus pour mesurer l'intervalle de temps qui sépare l'écho dû à la réflexion sur l'interface de l'écho dû à la réflexion sur la surface du contaminant et pour en déduire l'épaisseur de contaminant.

10. Dispositif selon l'une quelconque des revendications 4 à 9, caractérisé en ce qu'il comporte des moyens (24) de mesure de la température du bloc de retard (16) et des moyens de correction des mesures en fonction de la température.

11. Dispositif suivant l'une quelconque des revendications 4 à 10, caractérisé en ce qu'il comporte des moyens d'auto-test vérifiant la présence d'un écho à chaque excitation du transducteur ou de chaque transducteur d'émission.

## Patentansprüche

1. Verfahren zum Nachweis der Anwesenheit und zur Identifizierung eines Verunreinigungsstoffes auf der Oberfläche einer Struktur, wonach man einen Ultraschallimpuls in Richtung auf die Grenzfläche quer durch einen Materialblock (16) steuert, der Bestandteil einer Verzögerungsleitung ist, **gekennzeichnet dadurch, daß** man dem Material eine akustische Impedanz verleiht, die zwischen derjenigen der Enteisungs- und Antivereisungsflüssigkeiten und derjenigen des Eises liegt, daß man die Amplituden des Echos, das man an der Grenzfläche erhält, unter schrägen Einfall mit derjenigen des Einfallimpulses oder mit derjenigen eines Referenzechos, das mit einer sauberen Oberfläche erhalten wird, vergleicht und daß man bestimmt, ob das Echo eine Phaseninversion durchlaufen hat.

2. Verfahren nach Anspruch 1, **gekennzeichnet dadurch, daß** man im Verlauf einer vorangegangenen Kalibrierungsphase das Echo, das man mit einer sauberen Oberfläche erhält, speichert und man die Amplitude und das Vorzeichen des ersten Echopiks mißt.

3. Verfahren nach den Ansprüchen 1 und 2, **gekennzeichnet dadurch, daß** man den Zeitabstand mißt, welcher das Echo auf der Grenzfläche von dem Echo auf der Kontaktoberfläche der Verunreinigungsstoffe mit der Luft trennt, um die Schichtdicke des Verunreinigungsstoffes abzuziehen.

4. Vorrichtung zum Nachweis der Anwesenheit und zur Identifizierung eines Verunreinigungsstoffes auf der Oberfläche einer Struktur, die eine Sonde (10), die einen Verzögerungsblock (16) hat, welcher eine Grenzfläche darstellt, die dazu bestimmt ist, die Oberfläche abzugleichen, eine Vielzahl von Wandlereinrichtungen und Erregungs- und Analyseeinrichtungen (12) umfaßt, **gekennzeichnet dadurch, daß** die Sonde aus Wandlern zur Emission und zum Empfang (20-22) besteht, die senkrecht zu jedem von einer der beiden Flächen des Verzögerungsblockes, der die gleiche Neigung in Bezug auf die Grenzfläche hat, orientiert sind, wobei der Block aus einem Material ist, das eine akustische Impedanz hat, die sich zwischen 2, 7 und 3 x 10⁶ kg/m².s beläuft, und, daß die Einrichtungen zur Erregung und zur Analyse dafür vorgesehen sind, einen elektrischen Erregungsimpuls an die Emissionswandler zu senden und die Amplitude und die Phase von dem Grenzflächenecho mit einem Referenzecho, das mit der Abwesenheit des Verunreinigungsstoffes korrespondiert, oder mit dem Ultraschallsignal, das von dem Emissionswandler geliefert wird, zu vergleichen.

5. Vorrichtung nach Anspruch 4, **gekennzeichnet dadurch, daß** der Verzögerungsblock (16) aus Polysulfon ist.

6. Vorrichtung nach Anspruch 4 oder 5, **gekennzeichnet dadurch, daß** die Flächen des Blockes dergestalt orientiert sind, daß der Einfallswinkel auf der Grenzfläche nahe dem Winkel der Totalreflektion für die Longitudinalwellen für das Dioptermaterial/Eis ist.

7. Vorrichtung nach Anspruch 4, 5 oder 6, **gekennzeichnet dadurch, daß** die Erregungs- und Analyseeinrichtungen Einrichtungen (40) zur Speicherung von einem Referenzecho, das mit einer sauberen Oberfläche erhalten wird, beinhalten.

8. Vorrichtung nach einem der Ansprüche 4 - 7, **gekennzeichnet dadurch, daß** der Wandler oder jeder Emissionsumwandler (20) vom gedämpften Typ ist, und daß die Erregungseinrichtungen dafür vorgesehen sind, kurze Impulse an den Emissionsumwandler zu liefern.

9. Vorrichtung nach einem der Ansprüche 4 - 8, **gekennzeichnet dadurch, daß** sie Analyseeinrichtungen dafür vorgesehen sind, die Zeitabstände zu messen, welche das Echo von der Reflektion an der Grenzfläche zu dem Echo von der Reflektion an der Oberfläche des Verunreinigungsstoffes zu messen und die Dicke des Verunreinigungsstoffes abzuziehen.

10. Vorrichtung nach einem der Ansprüche 4 - 9, **gekennzeichnet dadurch, daß** sie Einrichtungen (24) zum Messen der Temperatur des Verzögerungsblocks (16) und Einrichtungen zur Korrektur der Messungen in Funktion von der Temperatur umfaßt.

11. Vorrichtung nach einem der Ansprüche 4 - 10, **gekennzeichnet dadurch, daß** sie Einrichtungen zum automatischen Testen umfaßt, die die Anwesenheit von einem Echo bei jeder Erregung von dem Wandler oder von jedem Emissionswandler nachprüfen.

## Claims

1. A method for detecting and identifying a contaminant on a surface of a structure, comprising directing a burst of ultrasounds toward the interface through a block of material (16) that constitutes a delay line, characterized by giving, to the material, an acoustic impedance that is intermediate between the impedance of defrosting and antifrost liquids and the impedance of ice, comparing the amplitude of the echo obtained on the interface, at an oblique angle of incidence, with those of the incident burst or of a reference echo as obtained using a clean surface, and determining whether the echo has been subjected to a phase inversion.

2. Method according to claim 1, characterized in that, during a preliminary calibration step, the echo obtained with a clean surface is stored and the amplitude and the sign of a first peak of the echo is measured.

3. Method according to claim 1 or 2, characterized by measuring the time interval separating the echo on said interface and the echo on the surface of contact of the contaminant with air for deriving the thickness of the contaminant layer.

4. Apparatus for detecting and identifying a contaminant on the surface of a structure, comprising a probe (10) having a delay block (16) exhibiting an interface apt to be placed flush with the surface, provided with transducing means and comprising energizing and analyzing means (12), characterized in that the probe comprises transmission and reception transducers (20-22) which are located orthogonally each to one of two faces of the delay block having a same slope with respect to the interface, the block being of a material having an acoustic impedance between 2.7 and 3 x 10⁶ kg/m².s, and in that the energization and analysis means are arranged for sending an electrical energization pulse to the transmission transducers and for comparing the amplitude and the phase of the interface echo with a reference echo corresponding to absence of contaminant or with the ultrasound signal originating from the transmission transducer.

5. Apparatus according to claim 4, characterized in that the delay block (16) is made of polysulfone.

6. Apparatus according to claim 4 or 5, characterized in that the faces of the block are angularly located for the incidence angle on the interface to be close to the total reflection angle for longitudinal waves for the material/ice dioptre.

7. Apparatus according to claim 4, 5 or 6, characterized in that the energization and analysis means comprise means (40) for storing a reference echo obtained with a clean surface.

8. Apparatus according to any one of claims 4-7, characterized in that the transmission transducer or each transmission transducer (20) is dampened and in that the energization means are arranged for delivering short pulses to the transmission transducer.

9. Apparatus according to any one of claims 4-8, characterized in that the analysis means are arranged for measuring the time interval which separates the echo due to reflection on the interface and the echo due to reflection on the surface of the contaminant and for deriving the thickness of the contaminant therefrom.

10. Apparatus according to any one of claims 4-9, characterized in that it comprises means (24) for measuring the temperature of the delay block (16) and means for correcting the measurements responsive to a temperature.

11. Apparatus according to any one of claims 4-10, characterized in that it comprises self-testing means for checking whether an echo is present responsive to each energization of the transmission transducer or each transmission transducer.
